# EUROPEAN PATENT SPECIFICATION

(11) **EP 3 401 955 B1**
(45) Date of publication and mention of the grant of the patent: **30.06.2021**
(21) Application number: 17170805.0
(22) Date of filing: 12.05.2017
(51) Int. Cl.: H01L 23/473, H02K 5/20, H02K 9/19, H01B 7/42

(54) **PLUG-IN CONNECTOR WITH A COOLING JACKET**
STECKVERBINDER MIT EINEM KÜHLMANTEL
CONNECTEUR ENFICHABLE COMPORTANT UNE CHEMISE DE REFROIDISSEMENT

(43) Date of publication of application: 14.11.2018
(73) Proprietor: ODU GmbH & Co. KG, 84453 Mühldorf (DE)
(72) Inventor: Leitl, Josef, 84453 Mettenheim (DE); Huber, Bernhard, 83558 Maitenbeth (DE); Spitzenberger, Dieter, 84559 Kraiburg (DE); Mitter, Alfred, 84431 Heldenstein (DE)
(74) Representative: SR Huebner - Munich Patent-und RechtsanwaltsPartG mbB

(56) References cited:
- EP-A1- 3 043 421
- US-A1- 2013 267 115
- US-A1- 2015 217 654

## Description

### Field of the Invention

The invention relates to a plug-in connector. The invention further relates to a method for operating a plug-in connector.

### Background of the Invention

US Patent US 9 321 362 B2 and US Patent Applications US 2015/0217654 A1 and US 2016/0200206 A1 relate to cooling of a charging cable. A charging system for an electric vehicle is disclosed, the charging system including a power supply, a cable having first and second ends, the first end attached to the power supply, with the cable comprising a charging conductor and a cooling conduit, each of which extends from the first end to the second end. The charging system further comprises a connector attached to the second end of the cable, the connector having a form factor corresponding to a charge port of the electric vehicle. The cooling conduit is adapted to convey a fluid that cools the charging conductor.

German Patent Application DE 10 2015 100 347 A1 describes an electrical connecting element for a charging connector and/or a charge port and to a charging connector and a charging station for supplying electrical energy to a recipient. An electrical connecting element for a charging connector and/or a charge port is described, wherein the electrical connecting element comprises a first connecting zone for a galvanic connection with an electrical power recipient and a second connecting zone for a galvanic connection with an electric power source, with the electrical connecting element comprising a cooling fluid channel that is formed in the electrical connecting element. Furthermore, a charging connector for coupling with a corresponding coupling apparatus and for transmission of electrical energy is disclosed, wherein the charging connector comprises an electrical connecting element, with the cooling fluid channel of the electrical connecting element being fluidically connected with a source of cooling fluid. Furthermore, a charging station for supplying electrical energy to a recipient is disclosed, wherein the charging station comprises a charging connector and a source of cooling fluid that is fluidically connectable with a cooling fluid channel of the electrical connecting element.

US patent application US 2013/0267115 A1 discloses a method and electrical connection for providing electrical power. The electrical connection comprises an electrical connector connected to an electrical conductor assembly. A current greater than a rated current capacity of at least one of the electrical connector and electrical conductor assembly may be passed through the electrical conductor assembly and electrical connector. The electrical connector and electrical conductor may be actively cooled with a flow of heat transfer medium flowing substantially along a length of the electrical conductor assembly and through the electrical connector to increase the current capacity of the electrical connection. Cabels and connectors and their associated flow channels may be adapted to direct at least one flow of heat transfer medium through the interior of the cables, substantially along their lengths, and through the connectors.

### Object of the Invention

The object of the invention is to provide a plug-in connector with a cooling facility that allows to effectively discharge heat.

### Summary of the Invention

According to the invention, a plug-in connector is provided. The plug-in connector comprises a contact element with a connector element and at least one terminal connector and a cooling jacket with a first fluid port adapted for fluidically connecting the cooling jacket with a first tube and a second fluid port adapted for fluidically connecting the cooling jacket with a second tube. The cooling jacket further comprises a connecting sleeve for accommodating the contact element, wherein the cooling jacket is manufactured in one piece and wherein the cooling jacket is made of a polymeric material. An outer surface of the contact element is encompassed by the connecting sleeve in a fluid-tight manner, wherein the connector element is at least partly exposed to the outside of the cooling jacket and wherein the at least one terminal connector is at least partly disposed in the interior of the cooling jacket. The at least one terminal connector is configured for being electrically connected with at least one electrical wire that is introducible into the cooling jacket via at least one of the fluid ports.

The contact element is made of an electrically conductive material, preferably of metal. The contact element comprises a connector element that is at least partly exposed to the outside of the cooling jacket. The connector element may for example be configured for electrically contacting a contact element of a mating connector or for being plugged into a mating connector. For example, the connector element may be implemented as a connector plug or a connector socket. The contact element further comprises at least one terminal connector, with the at least one terminal connector being at least partly disposed in the interior of the cooling jacket. The at least one terminal connector is configured for establishing an electrical contact with at least one electrical wire, with the at least one wire being fixed and electrically connected to the at least one terminal connector, whereby the at least one electrical wire may be introduced into the cooling jacket via one of the fluid ports. Hence, the electrical contact between the contact element and the at least one electrical wire is established in the interior of the cooling jacket.

Both the contact element and the at least one electrical wire may carry electrical current. For example, in case of a charging connector, the at least one electrical wire may be part of a power cable adapted for supplying large currents. The larger the currents, the more heat is deposited in the contact element and the at least one wire. The cooling jacket is configured for removing the heat that has been deposited. The cooling jacket comprises a first fluid port and a second fluid port configured for being connected with a first tube and a second tube. A flow of coolant can be supplied via one of the tubes, is conveyed through the cooling jacket and is withdrawn via the other tube, and heat deposited in the contact element or in the at least one electrical wire can be effectively removed. The cooling jacket can for example be part of a cooling circuit and is capable of providing an enclosed volume of coolant configured for cooling the contact element. The contact element is enclosed by the connecting sleeve in a fluid-tight manner, whereby at least a part of the at least one terminal connector is located inside the cooling jacket. Hence, the interaction of the flow of coolant with the part of the contact element that is located inside of the cooling jacket provides for an effective transfer of heat from the contact element to the flow of coolant.

The cooling jacket is manufactured in one piece and is made of a polymeric material. As the cooling jacket is made in one piece, the cooling jacket is capable of hermetically sealing and encapsulating the enclosed volume of coolant, thereby reducing safety hazards. The cooling jacket provides a robust enclosure that is not prone to damages.

Further according to the invention, a method for operating a plug-in connector is provided. The plug-in connector comprises a contact element with a connector element and at least one terminal connector and a cooling jacket with a connecting sleeve for accommodating the contact element, a first fluid port adapted for fluidically connecting the cooling jacket with a first tube and a second fluid port adapted for fluidically connecting the cooling jacket with a second tube. The cooling jacket is manufactured in one piece and the cooling jacket is made of a polymeric material. An outer surface of the contact element is encompassed by the connecting sleeve in a fluid-tight manner, wherein the connector element is at least partly exposed to the outside of the cooling jacket and wherein the at least one terminal connector is at least partly disposed in the interior of the cooling jacket. The at least one terminal connector is configured for being electrically connected with at least one electrical wire that is introducible into the cooling jacket via at least one of the fluid ports. The method comprises supplying a flow of coolant to the second fluid port, wherein the coolant passes the cooling jacket's interior, with the coolant impinging on the at least one terminal connector of the contact element or on an insulating sheath enclosing the at least one terminal connector, and withdrawing a flow of coolant at the first fluid port. Accordingly, the fluid impinging on the at least one terminal connector is capable of discharging heat with high efficiency and at a considerable rate.

Further according to the invention, a plug-in connector is provided. The plug-in connector comprises a contact element with a connector element and at least one terminal connector and a cooling jacket with a first fluid port adapted for fluidically connecting the cooling jacket with a first tube and a second fluid port adapted for fluidically connecting the cooling jacket with a second tube. The cooling jacket further comprises a connecting sleeve for accommodating the contact element. An outer surface of the contact element is encompassed by the connecting sleeve in a fluid-tight manner, wherein the connector element is at least partly exposed to the outside of the cooling jacket and wherein the at least one terminal connector is at least partly disposed in the interior of the cooling jacket. The at least one terminal connector is configured for being electrically connected with at least one electrical wire that is introducible into the cooling jacket via at least one of the fluid ports. The plug-in connector further comprises an insulating sheath configured for electrically insulating the contact element relative to a coolant in the interior of the cooling jacket.

The insulating sheath is configured for electrically insulating the parts of the contact elements that are exposed to the coolant, in particular the at least one terminal connector, relative to the coolant. Thus, it can be accomplished that the coolant is electrically insulated relative to the current carrying parts of the plug-in connector, thereby reducing safety hazards. The choice of possible coolants is widened, because also conductive coolants like for example water can be employed. Furthermore, by providing an additional electrical insulation between the contact element and the coolant, safety requirements on the housing can be lowered.

Further according to the invention, a method for operating a plug-in connector is provided. The plug-in connector comprises a contact element with a connector element and at least one terminal connector and a cooling jacket with a connecting sleeve for accommodating the contact element, a first fluid port adapted for fluidically connecting the cooling jacket with a first tube and a second fluid port adapted for fluidically connecting the cooling jacket with a second tube. An outer surface of the contact element is encompassed by the connecting sleeve in a fluid-tight manner, wherein the connector element is at least partly exposed to the outside of the cooling jacket and wherein the at least one terminal connector is at least partly disposed in the interior of the cooling jacket. The at least one terminal connector is configured for being electrically connected with at least one electrical wire that is introducible into the cooling jacket via at least one of the fluid ports. The plug-in connector further comprises an insulating sheath configured for electrically insulating the contact element relative to a coolant in the interior of the cooling jacket. The method comprises supplying a flow of coolant to the second fluid port, wherein the coolant passes the cooling jacket's interior, with the coolant impinging on the insulating sheath, and withdrawing a flow of coolant at the first fluid port.

### Preferred Embodiments of the Invention

Preferred features of the invention which may be applied alone or in combination are discussed below and in the dependent claims.

Preferably, the cooling jacket is made of an elastomer. An elastomer is an elastically deformable polymeric material. Elastomers comprise for example natural rubber and synthetic rubber. Polymer chains are held together in elastomers by weak intermolecular forces. These weak binding forces permit the polymers to be stretched. The application temperature of an elastomer is above the glass transition temperature. In case the cooling jacket is made of an elastomer, the fluid ports and the connecting sleeve can be pressed against the respective tube or against the contact element and thus establish a fluid-tight sealing. As a consequence, no extra sealing gaskets or O-rings are required. Furthermore, a cooling jacket made of an elastomer provides a robust enclosure that is not prone to damages.

Preferably, the cooling jacket is made of an elastomer with a glass transition temperature below 0° C. Preferably, the cooling jacket is made of an elastomer with a glass transition temperature below -10° C. Preferably, the cooling jacket is made of an elastomer with a glass transition temperature below -20° C. Preferably, the cooling jacket is made of an elastomer with a glass transition temperature below -30° C. Preferably, the cooling jacket is made of an elastomer with a glass transition temperature below -50° C.

Preferably, the elastomer is one of a fluoroelastomer, nitrile rubber, polychloroprene, silicone rubber. Fluoroelastomers like for example FKM, nitrile rubbers like for example nitrile butadiene rubber (NBR), polychloroprene, neoprene and silicone rubber are suitable materials for manufacturing the cooling jacket.

Preferably, the cooling jacket is made of a material having a Shore hardness above 30 Shore-A. Preferably, the cooling jacket is made of a material having a Shore hardness above 40 Shore-A. Preferably, the cooling jacket is made of a material having a Shore hardness above 50 Shore-A. Preferably, the cooling jacket is made of a material having a Shore hardness below 98 Shore-A. Preferably, the cooling jacket is made of a material having a Shore hardness below 95 Shore-A. Preferably, the cooling jacket is made of a material having a Shore hardness below 90 Shore-A. Preferably, the cooling jacket is made of a material having a Shore hardness below 80 Shore-A. Preferably, the cooling jacket is made of a material having a Shore hardness below 70 Shore-A. These ranges of the Shore-A hardness are characteristic for a rubber-like behavior. Accordingly, the cooling jacket itself can act as a sealing element when being pressed against another element. For example, the connecting sleeve may be circumferentially pressed against the contact element to establish a fluid-tight connection. Similarly, the fluid ports may be circumferentially pressed against a tube to establish a fluid-tight coupling. By providing a cooling jacket with rubber-like elastic properties, a fluid-tight connection can be accomplished by pressing the cooling jacket against its counterpart. In this respect, no additional sealing gaskets or O-rings are required. Another advantage is that a material of the cooling jacket with a hardness in the range indicated above does not tend to break, but can flexibly adapt to forces and pressures. Thus, the cooling jacket is not prone to be damaged. Furthermore, the cooling jacket can adapt to a rigid housing of the plug-in connector that encompasses the cooling jacket.

Preferably, the cooling jacket possesses elastic properties. In this regard, elastic behavior shall mean that the material of the cooling jacket is deformed if forces or pressures act on it, but as soon as the force or the pressure is not applied to the cooling jacket anymore, the cooling jacket will reassume its initial shape. Preferably, the cooling jacket is made of a rubber-elastic material.

Preferably, the plug-in connector further comprises a housing, said housing encompassing the cooling jacket, wherein a support provided by the housing is adapted for limiting a deformation or expansion of the cooling jacket. In case a fluid at a certain pressure is supplied to the cooling jacket via one of the fluid ports, the cooling jacket will be pressurised and may accordingly expand or bulge out. In order to restrict these deformations and prevent any volumetric changes, it may be advantageous to encompass the cooling jacket with a rigid housing that provides additional support and stability.

Preferably, the connecting sleeve is disposed at a first end in an axial direction of the plug-in connector, wherein the first fluid port is disposed at a second end opposite to the first end in the axial direction and wherein the second fluid port is disposed at a lateral position of the cooling jacket. Further preferably, fluid, and in particular a coolant, may be supplied to the second fluid port, whereas at the first fluid port, fluid is withdrawn after having passed through the cooling jacket's interior. By providing a flow of coolant at a lateral position of the plug-in connector, an effective cooling of the contact element can be accomplished, because the coolant is directly supplied to the rear part of the contact element. Heat generated at the contact element can be effectively removed.

Preferably, the contact element comprises the connector element, a central section and the at least one terminal connector, with the central section being circumferentially encompassed by the connecting sleeve. The connector element is at least partly exposed to the outside of the cooling jacket. The connector element may for example be a connector plug or a connector socket. The connector element may for example be plugged into a mating connector. By plugging the connector element into the corresponding mating connector, a plug-in connection between the plug-in connector and the mating connector is established. In contrast, the at least one terminal connector is at least partly located in the interior of the cooling jacket. Thus, the terminal connector(s) can be exposed to a flow of coolant in the interior of the cooling jacket and heat deposited in the contact element can be removed. Furthermore, the at least one terminal connector may be electrically connected with one or more electrical wires that are led into the cooling jacket via one of the fluid ports. The electrical wires can be cooled by a flow of coolant in the cooling jacket as well. Preferably, at least one of the terminal connectors is implemented as a contact sleeve. A contact sleeve allows for accommodating and connecting an electrical wire. For establishing an electrical connection between the contact sleeve and the electrical wire, techniques like for example crimping, welding, screwing, clamping and others may be used. The contact sleeve may for example be implemented as a crimping sleeve or as an axial screw terminal.

Preferably, the contact element comprises several terminal connectors, each of the several connectors being adapted for being electrically connected with an electrical wire. The contact element may either comprise a single terminal connector, but it may as well comprise several terminal connectors.

Preferably, the interior of the cooling jacket is adapted for being pressurised by a fluid supplied via at least one of the fluid ports. The cooling jacket may for example be hermetically sealed. In case fluid is supplied to the cooling jacket, the cooling jacket can be pressurised by the flow of coolant provided via at least one of the fluid ports. Thus, a flow of coolant can be conveyed through the cooling jacket.

Preferably, the terminal connector does not comprise any additional conduits or channels for increasing the interaction between the coolant and the terminal connector. Preferably, the terminal connector does not comprise a dedicated channel for conveying coolant through the terminal connector. It has been found that for an effective cooling operation, the flow resistance within the cooling jacket has to be kept low. For removing the heat deposited in the terminal connector, it is not necessary to provide for additional conduits and channels traversing the terminal connectors. A sheath flow encompassing the terminal connectors is sufficient.

Preferably, via the second fluid port, a flow of coolant is supplied to the cooling jacket, and via the first fluid port, a flow of coolant is withdrawn from the cooling jacket. Preferably, the flow of coolant is supplied via the second fluid port, which is preferably located at a lateral position of the cooling jacket. The flow of fluid is directly supplied to the at least one connector terminal, which provides for an effective cooling.

Preferably, the coolant is a gas or a liquid. As the cooling jacket is fluid-tightly sealed, it is also possible to pass a gas through the cooling jacket.

Preferably, the second fluid port is disposed at a lateral position of the cooling jacket, wherein the at least one terminal connector is arranged such that a flow of coolant supplied via the second fluid port impinges on the at least one terminal connector or on an insulating sheath enclosing the at least one terminal connector. Further preferably, the second fluid port is located at a lateral position close to the connector element. By moving the point where the coolant is supplied towards the anterior part of the plug-in connector, i e in the direction towards the point where the connector element contacts a mating connector, the flow path for the flow of coolant is extended and cooling performance is improved.

Preferably, the plug-in connector further comprises the at least one electrical wire, with each of the electrical wires being electrically connected with a corresponding terminal connector, wherein the at least one electrical wire and at least the part of the contact element that is exposed to a coolant supplied via at least one of the fluid ports are insulated relative to the coolant. In case both the electrical wires and the exposed parts of the contact elements are insulated relative to the coolant, the coolant does not get in direct contact with the current carrying elements. Accordingly, an electrically conductive coolant like for example water may be used.

Preferably, the at least one electrical wire is enclosed by a cable insulation. Preferably, the plug-in connector further comprises an insulating sheath configured for electrically insulating the contact element relative to a coolant in the interior of the cooling jacket. By providing an insulating sheath, the current carrying parts can be electrically insulated relative to the coolant, thereby reducing safety hazards. Preferably, at least the part of the contact element that is exposed to a coolant supplied via at least one of the fluid ports is insulated with an insulating sheath. Preferably, the insulating sheath is integrally formed with the cooling jacket. Forming the cooling jacket and the insulating sheath in one piece provides for a reliable insulation. Alternatively, the insulating sheath may be implemented as a separate part. Preferably, the insulating sheath overlaps with the cable insulation. Preferably, the coolant is an electrically conductive coolant.

Preferably, the plug-in connector further comprises the first tube, said first tube being fluid-tightly connected with the first fluid port. Preferably, the first tube is used for withdrawing coolant from the cooling jacket. Preferably, the plug-in connector further comprises the second tube, said second tube being fluid-tightly connected with the second fluid port. Preferably, the second tube is used for supplying coolant to the cooling jacket. Preferably, the cooling jacket is configured for receiving a flow of coolant via the second tube, for conveying the coolant through the cooling jacket's interior and for supplying the flow of coolant to the first tube.

Preferably, the plug-in connector further comprises the at least one electrical wire, with each of the electrical wires being electrically connected with a corresponding terminal connector. Preferably, the at least one electrical wire is led into the cooling jacket via the first fluid port. By introducing the at least one electrical wire into the cooling jacket via one of the fluid ports, no additional cable passage is required. Preferably, the at least one electrical wire is encompassed by the first tube. The cable comprising one or more electrical wires is arranged within one of the first or the second tube and is led into the cooling jacket via one of the fluid ports. The at least one electrical wire may for example be enclosed by a flow of coolant, and accordingly, the cable is effectively cooled. The interspace between the electrical cable and the first tube may for example provide a fluid conduit for the flow of coolant. Alternatively, a dedicated channel for the coolant may for example be provided in the first tube.

Preferably, the at least one electrical wire is encompassed by the first tube, with an interspace for conducting a flow of coolant being formed between the at least one electrical wire and the first tube. Preferably, a flow of coolant flowing in the interspace provides for a cooling of the at least one electrical wire enclosed by the first tube. The flow of coolant may for example encompass the at least one electrical wire at all sides, which allows for an effective transfer of heat.

Preferably, the first fluid port is implemented as a connecting sleeve. Further preferably, the first fluid port is implemented as a connecting sleeve configured for circumferentially encompassing the first tube. Preferably, the second fluid port is implemented as a connecting sleeve. Further preferably, the second fluid port is implemented as a connecting sleeve configured for circumferentially encompassing the second tube. Preferably, the first fluid port and the second fluid port are implemented as separate fluid ports. Preferably, the first fluid port and the second fluid port are implemented as separate connecting sleeves. Further preferably, the first fluid port and the second fluid port are spaced apart from one another.

Preferably, the plug-in connector further comprises a fastening ring adapted for fluid-tightly pressing the first fluid port against the first tube disposed in the first connecting sleeve. Preferably, the plug-in connector further comprises a fastening ring adapted for fluid-tightly pressing the second fluid port against the second tube disposed in the second connecting sleeve. Preferably, the plug-in connector further comprises a fastening ring adapted for fluid-tightly pressing the connecting sleeve against the central section of the contact element. Further preferably, a joining technique like crimping or flanging may for example be used for fluid-tightly pressing the connecting sleeve against the central section of the contact element.

Preferably, the plug-in connector further comprises a second contact element, with the cooling jacket further comprising a second connecting sleeve for accommodating the second contact element, with an outer surface of the second contact element being encompassed by the second connecting sleeve in a fluid-tight manner. The cooling jacket can be used for cooling two or more contact elements. For example, the cooling jacket may comprise two or more connecting sleeves for accommodating the contact elements.

Preferably, the second contact element comprises a second connector element and at least one second terminal connector, wherein the second connector element is at least partly exposed to the outside of the cooling jacket and wherein the at least one second terminal connector is at least partly disposed in the interior of the cooling jacket.

Preferably, the plug-in connector is a charging connector adapted for performing a charging operation. In a charging operation, and in particular in a fast charging operation, large currents are supplied to an electric vehicle. The larger the current, the more heat will be dissipated. The cooling jacket allows to establish a thermal contact between the terminal connectors and the coolant and accordingly, the large amount of heat dissipated during the charging operation can be discharged.

Preferably, the plug-in connector is configured for carrying an electrical current above 80 Ampere. Preferably, the charging connector is adapted for being connected with a charge port of an electric vehicle. Preferably, the mating direction when plugging the charging connector into a charge port is an axial direction of the charging connector.

### Plug-in connector with cooling jacket manufactured in one piece

The following embodiments relate to a plug-in connector comprising a cooling jacket manufactured in one piece, the cooling jacket being made of a polymeric material.

Preferably, at least part of the at least one terminal connector is exposed to a coolant supplied via at least one of the fluid ports. Preferably, in case a flow of coolant is supplied to at least one of the fluid ports, the coolant is in direct contact with the at least one terminal connector of the contact element. In case the coolant is in direct contact with at least one of the terminal connectors, the transfer of heat from the at least one terminal connector to the coolant is intensified.

Preferably, the coolant is a non-conductive coolant. In general, cooling is required for plug-in connectors that carry large currents. In case of a direct contact between the coolant and the contact elements, a non-conductive coolant like for example oil is used, in order to avoid safety hazards.

Preferably, in case a flow of coolant is supplied to the second fluid port, at least one of the terminal connectors is encompassed by a sheath flow of coolant. The sheath flow may for example enclose the terminal connector at all sides and may flow along the entire length of the terminal connector, thereby removing heat deposited in the contact element. A sheath flow of coolant provides for an effective removal of heat without unduly increasing flow resistance.

### Plug-in connector with an insulating sheath for electrically insulating the contact element relative to the coolant

The following embodiments relate to a plug-in connector comprising an insulating sheath configured for electrically insulating the contact element relative to a coolant in the interior of the cooling jacket.

Preferably, the insulating sheath is integrally formed with the cooling jacket. Forming the cooling jacket and the insulating sheath in one piece provides a most reliable electrical insulation. Alternatively, the insulating sheath may be implemented as a separate part.

Preferably, the cooling jacket is made of a rigid material. In this case, the cooling jacket stabilises the plug-in connector and provides a rigid support. No additional support is required. Further preferably, the cooling jacket is made of a polymeric material. Further preferably, the cooling jacket is made of hard plastic or of metal.

Preferably, the cooling jacket is made of two or more parts. Providing a cooling jacket made of two or more parts may simplify the assembly, because the parts may be fitted from different directions.

### Brief Description of the Drawing

The invention is illustrated in greater detail with the aid of schematic drawings.

It shows schematically:
Figure 1: Figure 1 shows a first example of a plug-in connector that provides for a direct cooling of the terminal connector and the electrical wire.
Figure 2: Figure 2 shows a longitudinal section of the cooling jacket.
Figure 3: Figure 3 shows a second example of a plug-in connector, wherein the current carrying parts are electrically insulated relative to the coolant.
Figure 4: Figure 4 shows a third example of a plug-in connector, wherein the current carrying parts are electrically insulated relative to the coolant.

### Detailed Description of Embodiments of the Invention

In the following description of preferred embodiments of the present invention, identical reference numerals denote identical or comparable components.

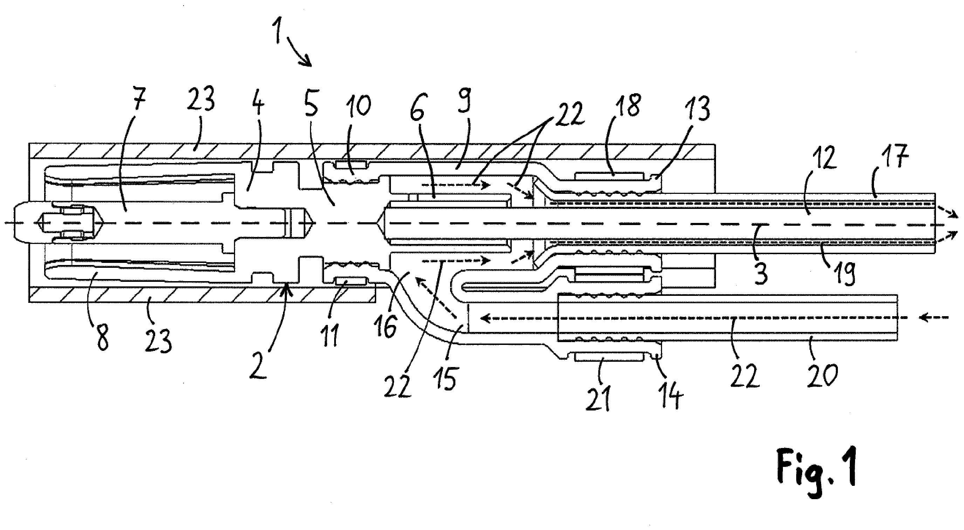

Figure 1 shows a longitudinal section of a plug-in connector 1. The plug-in connector 1 shown in figure 1 is particularly suited for carrying large electrical currents. The plug-in connector 1 may for example be a charging connector for a fast-charging vehicle charger, but it may as well be used for other applications where large electrical currents of for example 80 Ampere or more occur. In general, the higher the current flow in a conductor, the more heat will be deposited in the conductor. In order to remove the dissipated heat, the plug-in connector 1 comprises a cooling circuit configured for conveying a flow of coolant through the plug-in connector 1.

The plug-in connector 1 comprises a contact element 2 made of conductive material, preferably metal. When viewed in the axial direction 3 of the plug-in connector 1, the contact element 2 comprises a connector element 4, a central section 5 and a terminal connector 6. The connector element 4 comprises a protective pin 7 and split fingers 8, with the connector element 4 being configured for establishing a plug-in connection with a mating male connector, for example with a charge port of an electric vehicle. The mating direction for establishing the plug-in connection between the connector element 4 and the mating male connector corresponds to the axial direction 3 indicated in figure 1.

For implementing a cooling circuit, the plug-in connector 1 shown in figure 1 comprises a cooling jacket 9 made of a polymeric material, preferably of an elastomer. When viewed in the axial direction 3, the cooling jacket 9 comprises a connecting sleeve 10 at a first end. The connecting sleeve 10 is configured for accommodating the central section 5 of the contact element 2. The contact element 2 is partly exposed to the outside of the cooling jacket 9 and partly disposed inside of the cooling jacket 9. For example, in figure 1, the connector element 4 is located outside of the cooling jacket 9, whereas the terminal connector 6 is located in the interior of the cooling jacket 9. The central section 5 is integrally formed with the connector element 4 and with the terminal connector 6. Preferably, the contact element 2 is manufactured as a single piece, preferably as a rotationally symmetric piece. Alternatively, the connector element 4, the central section 5 and the terminal connector 6 may be manufactured as separate parts, which are then mechanically and electrically connected.

The central section 5 preferably has an essentially cylindrical shape, with the outer surface being circumferentially enclosed by the connecting sleeve 10. Due to the elastic properties of the cooling jacket 9, a fluid-tight sealing between the connecting sleeve 10 and the central section 5 can be obtained by pressing the connecting sleeve 10 against the central section 5. For example, as shown in figure 1, a fastening ring 11 that encloses both the central section 5 and the connecting sleeve 10 can be used for circumferentially pressing the connecting sleeve 10 against the central section 5, thereby establishing a fluid-tight connection. Alternatively, joining techniques like for example crimping or flanging can be employed for establishing a fluid-tight connection between the central section 5 and the connecting sleeve 10. In case a cooling jacket 9 with sufficient elasticity is used, no additional sealing gaskets or O-ring seals are required.

The terminal connector 6 is located in the interior of the cooling jacket 9 and is configured for establishing an electrical connection with an electrical wire 12. The terminal connector 6 may for example be implemented as a contact sleeve configured for accommodating the electrical wire 12. In particular, the electrical wire 12 is inserted into the contact sleeve and fastened in the contact sleeve. For example, the electrical wire may be fixed in the contact sleeve by means of screws, clamps, crimping, welding, in particular ultrasonic welding or resistance welding, etc. For example, for applications in the field of fast charging, the electrical wire 12 may for example carry a current of 80 Ampere or more, and accordingly, it is important to establish a reliable electrical connection of low contact resistance between the terminal connector 6 and the electrical wire 12.

The cooling jacket 9 is adapted for realising a cooling circuit for cooling both the terminal connector 6 and the electrical wire 12. In addition to the connecting sleeve 10, which is disposed at a first end in the axial direction 3, the cooling jacket 9 further comprises two fluid ports 13 and 14. Viewed in the axial direction 3, the first fluid port 13 is located at a second end of the cooling jacket 9, opposite to the connecting sleeve 10. The second fluid port 14 is located at a lateral position of the cooling jacket 9, with the second fluid port 14 being connected via a tubing 15 with a lateral inlet 16 that branches off laterally from the axial flow path of the cooling jacket 9.

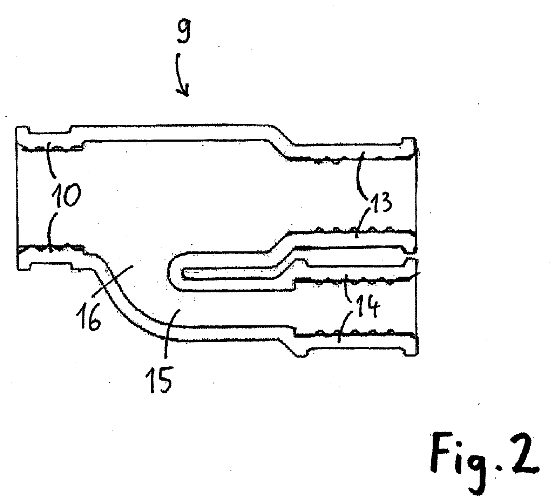

In figure 2, the cooling jacket 9 is shown separately. The cooling jacket 9 is manufactured in one piece and comprises three openings. At a first end in the axial direction 3, the connecting sleeve 10 is arranged. At a second end opposite to the first end in the axial direction 3, the first fluid port 13 is disposed, and at a lateral position thereto, the second fluid port 14 is arranged, the second fluid port 14 being fluidically connected via the tubing 15 with the lateral inlet 16.

Via the first fluid port 13, the electrical wire 12 is inserted into the terminal connector 6. Furthermore, the first fluid port 13 is configured for establishing a fluidic connection with a first tube 17. For establishing the fluid-tight connection, the first tube 17 is inserted into the first fluid port 13 in a way that the first fluid port 13 encompasses the end of the first tube 17. Then, the first fluid port 13, which may be implemented as a connecting sleeve, is circumferentially pressed against the end of the first tube 17. For example, the first fluid port 13 may be pressed against the first tube 17 by means of a fastening ring 18 to provide for a fluid-tight sealing. The first tube 17 encloses the electrical wire 12 in a way that an interspace 19 is formed between the first tube 17 and the electrical wire 12. Via the interspace 19, a flow of coolant can be withdrawn from the interior of the cooling jacket 9. Thus, the first tube 17 encompasses the electrical wire 12, with coolant being conducted in the interspace 19 between the electrical wire 12 and the first tube 17.

Furthermore, via the second fluid port 14, a fluidic connection with the second tube 20 can be set up. For this purpose, the end of the second tube 20 is inserted into the second fluid port 14, which may be implemented as a connecting sleeve. In order to establish a fluid-tight connection, the fluid port 14 is circumferentially pressed against the end of the second tube 20. Preferably, a fastening ring 21 is used for fixing the second tube 20. Furthermore, joining techniques like crimping and flanging may be used for establishing a fluid-tight connection. In case a cooling jacket 9 with sufficient elasticity is used, no extra sealing gasket or O-ring is required at the first fluid port 13 and the second fluid port 14.

Via the second tube 20, a flow of coolant is provided to the cooling jacket 9. As indicated by the arrows 22, the incoming flow of coolant is conveyed by a tubing 15 to the lateral inlet 16 and impinges on the terminal connector 6. The terminal connector 6 is in direct contact with the coolant, thus providing for an effective transfer of heat from the contact element 2 to the coolant. This direct cooling effectively removes heat deposited in the terminal connector 6 and in the contact element 2. At the terminal connector 6, the flow of coolant is redirected and, as indicated by the arrows 22, along the entire length of the terminal connector 6 a sheath flow is formed. The flow of coolant is injected into the interspace 19 between the electrical wire 12 and the first tube 17 and flows along the electrical wire 12. Thus, the flow of coolant encompasses the electrical wire 12 and provides for an effective cooling of the electrical wire 12. Inside the cooling jacket 9, the coolant is in immediate contact with the terminal connector 6, which is made of conductive material. Accordingly, a non-conductive coolant like for example oil or gas should be used.

In order to avoid a deformation of the first tube 17 and of the second tube 20, rigid supporting rings may be inserted inside the tubes 17, 20 at the position of the first fluid port 13 and the second fluid port 14. The connecting sleeves of the fluid ports 13, 14 may then be pressed against the rigid supporting rings. These rigid supporting rings are not shown in figure 1. The plug-in connector 1 shown in figure 1 further comprises a rigid housing 23 that encompasses at least a part of the cooling jacket 9. The interior of the cooling jacket 9 is fluid-tightly sealed and can therefore be pressurised by a coolant supplied via at least one of the fluid ports 13, 14. As a result thereof, the cooling jacket 9 may bulge out. In order to limit this deformation of the cooling jacket 9, the cooling jacket 9 is preferably encompassed by the rigid housing 23.

For mounting the plug-in connector 1, the cooling jacket 9 is slid on the first tube 17 in the direction to the right of figure 1. The cooling jacket 9 is moved so far to the right that the electrical wire 12 can be electrically connected with the terminal connector 6 of the contact element 2. The electrical connection may for example be established by one of screwing, clamping, welding, crimping, etc. Then, the cooling jacket 9 is moved in the direction to the left of figure 1, wherein the central section 5 of the contact element 2 is inserted into the connecting sleeve 10 of the cooling jacket 9. Now, the first fluid port 13 is in its final position relative to the first tube 17. The connecting sleeve 10 is fixed relative to the central section 5 by the fastening ring 11 and the first fluid port 13 is fixed relative to the first tube 17 by the fastening ring 18. Then, the second tube 20 is slid into the second fluid port 14 and the second fluid port 14 is fixed relative to the second tube 20 by the fastening ring 21.

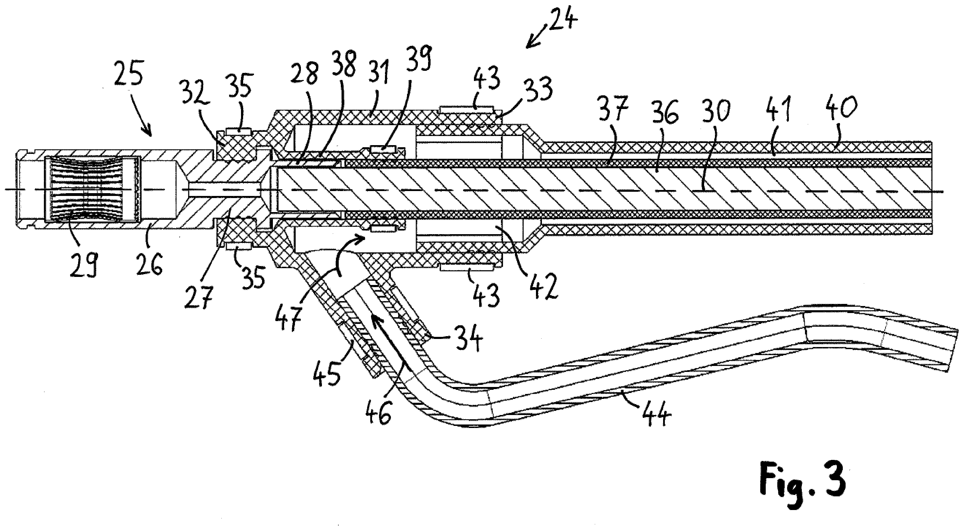

In figure 3, a further example of a plug-in connector 24 is depicted. The plug-in connector 24 comprises a cooling circuit for removing heat that has been dissipated in the conductor. However, in the embodiment of figure 3, the electrical parts that may carry large electrical currents are electrically insulated relative to the coolant. The plug-in connector 24 comprises a contact element 25 made of an electrically conductive material, preferably of metal. The contact element 25 comprises a connector element 26, a central section 27 and a terminal connector 28. In the example of figure 3, the connector element 26 comprises a socket with a lamellae basket 29. The connector element 26 is configured for establishing an electric contact with a mating male connector when the plug-in connector 24 is connected with the mating male connector, with the mating direction being the axial direction 30 indicated in figure 3.

For realising a cooling circuit, the plug-in connector 24 comprises a cooling jacket 31 made of a polymeric material, preferably of an elastomer. The cooling jacket 31 comprises a connecting sleeve 32, a first fluid port 33 and a second fluid port 34. When viewed in the axial direction 30, the connecting sleeve 32 is located at a first end, whereas the first fluid port 33 is disposed at a second end opposite to the first end. The second fluid port 34 is located at a lateral position of the cooling jacket 31.

The connecting sleeve 32 is configured for accommodating the central section 27 of the contact element 25. For establishing a fluid-tight connection, the connecting sleeve 32 is circumferentially pressed against the central section 27. For example, a fastening ring 35 may be employed for establishing a fluid-tight seal, but other joining techniques like crimping or flanging can be used as well. In case the connecting sleeve 32 is made of an elastomer, no extra sealing gaskets or O-rings are required. After the central section 27 has been fixed by the connecting sleeve 32, the connector element 26 is at least partly exposed to the outside of the cooling jacket 31, whereas the terminal connector 28 is at least partly located inside the cooling jacket 31. The terminal connector 28, which may for example be implemented as a contact sleeve, is configured for establishing an electrical connection with the electrical wire 36. For establishing this electrical connection, the electrical wire 36 is inserted via the first fluid port 33 into the interior of the cooling jacket 31 and fastened in the terminal connector 28.

In the example of figure 3, both the terminal connector 28 and the electrical wire 36 are electrically insulated relative to the coolant flowing in the cooling jacket 31. The electrical wire 36 is equipped with a cable insulation 37. In the interior of the cooling jacket 31, an insulating sheath 38 is provided, said insulating sheath 38 being integrally formed with the cooling jacket 31. Alternatively, the insulating sheath may be realised as a separate part. The insulating sheath 38 covers and insulates the terminal connector 28 and overlaps with the cable insulation 37 of the electrical wire 36. A fastening ring 39 may be used for pressing the insulating sheath 38 against the cable insulation 37 of the electrical wire 36. Alternatively, joining techniques like crimping or flanging can be used for fixing the electrical insulation. As a result, all current carrying parts are electrically insulated relative to the coolant flowing in the cooling jacket 31.

The first fluid port 33 of the cooling jacket 31 is configured for establishing a fluidic connection with a first tube 40. As shown in figure 3, the electrical wire 36 is enclosed by the first tube 40 and an interspace 41 is formed between the cable insulation 37 and the first tube 40. At the end of the first tube 40, a spacer ring 42 is inserted between the cable insulation 37 and the first tube 40. Via the spacer ring 42, a flow of coolant can be injected into the interspace 41 and withdrawn from the cooling jacket 31. For establishing a fluid-tight connection with the cooling jacket 31, the cooling jacket 31 with the electrical wire 36 is slid onto the first tube 40. Then, the first fluid port 33, which may for example be realised as a connecting sleeve, is circumferentially pressed against the first tube 40 and the spacer ring 42. A fastening ring 43 may be used for securing a fluid-tight connection or a joining technique like crimping or flanging may be employed. In case the first fluid port 33 is made of an elastomer, no extra sealing gaskets or O-rings are required.

The second fluid port 34 is adapted for accommodating the second tube 44. For establishing a fluid-tight connection, the second tube 44 is inserted into the second fluid port 34 and the fluid-tight connection is fastened by a fastening ring 45. The cooling jacket 31 is adapted for realising a cooling circuit for cooling both the terminal connector 28 and the electrical wire 36. During the operation of the plug-in connector 24, a flow of coolant is supplied to the second fluid port 34 via the second tube 44, as indicated by arrow 46. The flow of coolant impinges on the insulating sheath 38, thereby effecting a cooling of the terminal connector 28 and the electrical wire 36. The flow of coolant is redirected as indicated by arrow 47. Via the passageways of the spacer ring 42, the flow of fluid is injected into the interspace 41, thereby cooling the electrical wire 36.

As the cooling jacket 31 is fluid-tightly sealed, it can be pressurised by a coolant supplied via an at least one of the fluid ports 33, 34. In order to restrict any volumetric deformation of the cooling jacket 31, the cooling jacket 31 is preferably encompassed by a rigid housing, which is not shown in figure 3.

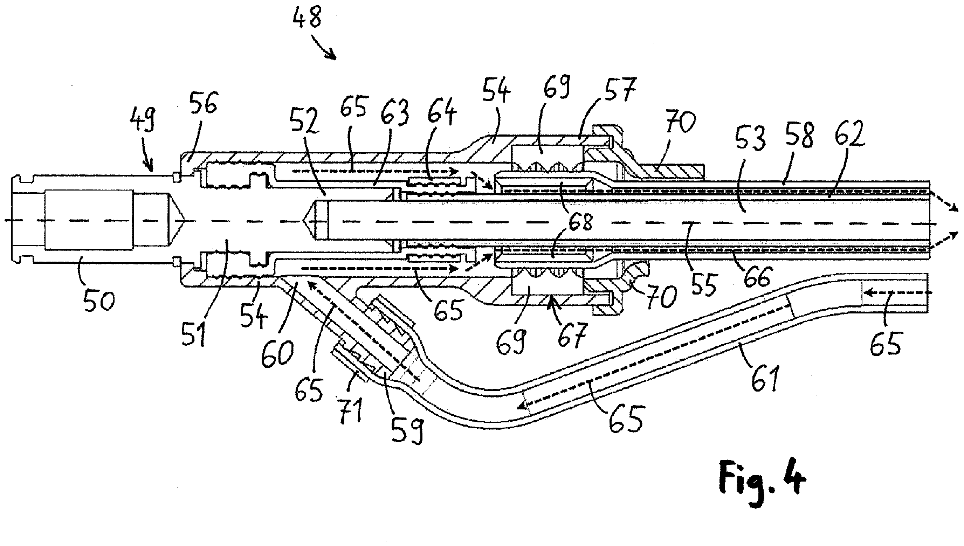

Figure 4 shows another embodiment of a plug-in connector 48, with said plug-in connector 48 comprising a cooling circuit for removing heat that has been deposited in the plug-in connector. The plug-in connector 48 comprises a contact element 49 with a connector element 50, a central section 51 and a terminal connector 52, wherein the terminal connector 52 is configured for establishing an electric connection with the electrical wire 53. The plug-in connector 48 further comprises a cooling jacket 54 that provides fluidic pathways for cooling the terminal connector 52 and the electric wire 53. The cooling jacket 54 is made of a rigid material. Preferably, the cooling jacket 54 is made of hard plastic or of metal.

The cooling jacket 54 comprises a connecting sleeve 56, the connecting sleeve 56 being disposed at a first end of the plug-in connector 48 in the axial direction 55. The connecting sleeve 56 is configured for accommodating the contact element 49 and for circumferentially enclosing the central section 51 of the contact element 49 in a fluid-tight manner. At the opposite end of the cooling jacket 54 viewed in the axial direction 55, a first fluid port 57 is arranged. The first fluid port 57 is configured for establishing a fluidic connection with a first tube 58. The cooling jacket 54 further comprises a second fluid port 59, the second fluid port 59 being fluidically connected with an inlet 60 disposed at a lateral position of the cooling jacket 54. The second fluid port 59 is adapted for establishing a fluidic connection with a second tube 61.

In the embodiment of figure 4, the electrically conductive parts located inside the cooling jacket 54 are insulated relative to the coolant. The electrical wire 53 is provided with a cable insulation 62 and the terminal connector 52 is enclosed by an insulating sheath 63. In the region where the insulation sheath 63 overlaps with the cable insulation 62, the insulating sheath 63 is circumferentially pressed against the cable insulation 62 by a fastening ring 64. Accordingly, both the electrical wire 53 and the terminal connector 52 are insulated relative to the coolant. When conveying a flow of coolant in the direction of the arrows 65 from the second tube 61 via the second fluid port 59 to the cooling jacket 54, the flow of coolant impinges on the insulating sheath 63, but in contrast to the embodiment of figure 1 there is no direct contact between the coolant and the terminal connector 52. Accordingly, the flow of coolant conveyed through the cooling jacket 54 provides for an indirect cooling of the terminal connector 52 and the electrical wire 53. Both a conductive coolant and a non-conductive coolant can be used.

The first tube 58 encompasses the electrical wire 53, whereby an interspace 66 is formed between the cable insulation 62 and the first tube 58. At the end of the first tube 58 the spacer ring 68 is inserted between the cable insulation 62 and the first tube 58. Via the spacer ring 68, a flow of coolant can be injected into the interspace 66 and withdrawn from the cooling jacket 54.

For mounting the plug-in connector 48, the electrical wire 53 is connected with the terminal connector 52 and the insulating sheath 63 is disposed around the terminal connector 52 and overlaps with the cable insulation 62. Then, the cooling jacket 54 and a sealing ring 69 positioned in the recess 67 are slid onto the contact element 49. Finally, a cap 70 is attached to the first fluid port 57. The cap 70 may for example be attached to the first fluid port 57 using a flanging tool. The second tube 61 is attached to the second fluid port 59 and fixed by a fastening ring 71.

During operation of the plug-in connector 48, a flow of coolant is conveyed from the second tube 61 via the second fluid port 59 to the interior of the cooling jacket 54. Along the terminal connector 52, a sheath flow of coolant is established. The coolant is then injected into the interspace 66 between the cable insulation 62 and the first tube 58.

The features described in the above description, claims and figures can be relevant to the invention in any combination. Their reference numerals in the claims have merely been introduced to facilitate reading of the claims. They are by no means meant to be limiting.

### List of reference numerals

1 plug-in connector
2 contact element
3 axial direction
4 connector element
5 central section
6 terminal connector
7 protective pin
8 split fingers
9 cooling jacket
10 connecting sleeve
11 fastening ring
12 electrical wire
13 first fluid port
14 second fluid port
15 tubing
16 lateral inlet
17 first tube
18 fastening ring
19 interspace
20 second tube
21 fastening ring
22 arrows
23 housing
24 plug-in connector
25 contact element
26 connector element
27 central section
28 terminal connector
29 lamellae basket
30 axial direction
31 cooling jacket
32 connecting sleeve
33 first fluid port
34 second fluid port
35 fastening ring
36 electrical wire
37 cable insulation
38 insulating sheath
39 fastening ring
40 first tube
41 interspace
42 spacer ring
43 fastening ring
44 second tube
45 fastening ring
46 arrow
47 arrow
48 plug-in connector
49 contact element
50 connector element
51 central section
52 terminal connector
53 electrical wire
54 cooling jacket
55 axial direction
56 connecting sleeve
57 first fluid port
58 first tube
59 second fluid port
60 inlet
61 second tube
62 cable insulation
63 insulating sheath
64 fastening ring
65 arrows
66 interspace
67 recess
68 spacer ring
69 sealing ring
70 cap
71 fastening ring

## Claims

1. A plug-in connector (1, 24), the plug-in connector comprising
a contact element (2, 25) with a connector element (4, 26) and at least one terminal connector (6, 28),
a cooling jacket (9, 31) with a first fluid port (13, 33) adapted for fluidically connecting the cooling jacket (9, 31) with a first tube (17, 40) and a second fluid port (14, 34) adapted for fluidically connecting the cooling jacket (9, 31) with a second tube (20, 44), wherein the cooling jacket (9, 31) further comprises a connecting sleeve (10, 32) for accommodating the contact element (2, 25), wherein the cooling jacket (9, 31) is manufactured in one piece and wherein the cooling jacket (9, 31) is made of a polymeric material,
**characterised in that** an outer surface of the contact element (2, 25) is encompassed by the connecting sleeve (10, 32) in a fluid-tight manner, wherein the connector element (4, 26) is at least partly exposed to the outside of the cooling jacket (9, 31) and wherein the at least one terminal connector (6, 28) is at least partly disposed in the interior of the cooling jacket (9, 31), wherein the at least one terminal connector (6, 28) is configured for being electrically connected with at least one electrical wire (12, 36) that is introducible into the cooling jacket (9, 31) via at least one of the fluid ports.
wherein via one of the first (13, 33) or second fluid ports (14, 34), a flow of coolant is supplied to the cooling jacket (9, 31), and wherein via the other of the first (13, 33) or second fluid ports (14, 34), a flow of coolant is withdrawn from the cooling jacket (9, 31).

2. Plug-in connector (1, 24) according to claim 1, wherein the cooling jacket (9, 31) is made of an elastomer.

3. Plug-in connector (1) according to claim 1 or claim 2, further comprising a housing (23), said housing (23) encompassing the cooling jacket (9), wherein a support provided by the housing (23) is adapted for limiting a deformation or expansion of the cooling jacket (9).

4. Plug-in connector (1, 24) according to any one of claims 1 to 3, wherein the connecting sleeve (10, 32) is disposed at a first end in an axial direction (3, 30) of the plug-in connector (1, 24), wherein the first fluid port (13, 33) is disposed at a second end opposite to the first end in the axial direction (3, 30) and wherein the second fluid port (14, 34) is disposed at a lateral position of the cooling jacket (9, 31).

5. Plug-in connector (1, 24) according to any one of claims 1 to 4, wherein the interior of the cooling jacket (9, 31) is adapted for being pressurised by a fluid supplied via at least one of the fluid ports.

6. Plug-in connector (1, 24) according to any one of claims 1 to 5, wherein via the second fluid port (14, 34), a flow of coolant is supplied to the cooling jacket (9, 31), and wherein via the first fluid port (13, 33), a flow of coolant is withdrawn from the cooling jacket (9, 31).

7. Plug-in connector (1, 24) according to any one of claims 1 to 6, wherein the second fluid port (14, 34) is disposed at a lateral position of the cooling jacket (9, 31), wherein the at least one terminal connector (6, 28) is arranged such that a flow of coolant supplied via the second fluid port (14, 34) impinges on the at least one terminal connector (6) or on an insulating sheath (38) enclosing the at least one terminal connector (28).

8. Plug-in connector (1) according to any one of claims 1 to 7, wherein in case a flow of coolant is supplied to at least one of the fluid ports, the coolant is in direct contact with the at least one terminal connector (6) of the contact element (2).

9. Plug-in connector (1) according to claim 8, wherein the coolant is a non-conductive coolant.

10. Plug-in connector (24) according to any one of claims 1 to 7, further comprising the at least one electrical wire (36), with each of the electrical wires (36) being electrically connected with a corresponding terminal connector (28), wherein the at least one electrical wire (36) and at least the part of the contact element (25) that is exposed to a coolant supplied via at least one of the fluid ports are electrically insulated relative to the coolant.

11. Plug-in connector (1, 24) according to any one of claims 1 to 10, wherein the plug-in connector (1, 24) further comprises a second contact element, with the cooling jacket (9, 31) further comprising a second connecting sleeve for accommodating the second contact element, with an outer surface of the second contact element being encompassed by the second connecting sleeve in a fluid-tight manner.

12. Plug-in connector (1, 24) according to any one of claims 1 to 11, wherein the plug-in connector (1, 24) is a charging connector adapted for performing a charging operation.

13. A method for operating a plug-in connector (1, 24), the plug-in connector comprising
a contact element (2, 25) with a connector element (4, 26) and at least one terminal connector (6, 28),
a cooling jacket (9, 31) with a connecting sleeve (10, 32) for accommodating the contact element (2, 25), a first fluid port (13, 33) adapted for fluidically connecting the cooling jacket (9, 31) with a first tube (17, 40) and a second fluid port (14, 34) adapted for fluidically connecting the cooling jacket (9, 31) with a second tube (20, 44), wherein the cooling jacket (9, 31) is manufactured in one piece and wherein the cooling jacket (9, 31) is made of a polymeric material,
wherein an outer surface of the contact element (2, 25) is encompassed by the connecting sleeve (10, 32) in a fluid-tight manner, wherein the connector element (4, 26) is at least partly exposed to the outside of the cooling jacket (9, 31) and wherein the at least one terminal connector (6, 28) is at least partly disposed in the interior of the cooling jacket (9, 31), wherein the at least one terminal connector (6, 28) is configured for being electrically connected with at least one electrical wire (12, 36) that is introducible into the cooling jacket (9, 31) via at least one of the fluid ports,
the method comprising
supplying a flow of coolant to the second fluid port (14, 34),
wherein the coolant passes the cooling jacket's interior, with the coolant impinging on the at least one terminal connector (6) of the contact element (2) or on an insulating sheath (38) enclosing the at least one terminal connector (28),
withdrawing a flow of coolant at the first fluid port (13, 33).

14. A plug-in connector (24, 48), the plug-in connector comprising
a contact element (25, 49) with a connector element (26, 50) and at least one terminal connector (28, 52),
a cooling jacket (31, 54) with a first fluid port (33, 57) adapted for fluidically connecting the cooling jacket (31, 54) with a first tube (40, 58) and a second fluid port (34, 59) adapted for fluidically connecting the cooling jacket (31, 54) with a second tube (44, 61), **characterised in that**
the cooling jacket (31, 54) further comprises a connecting sleeve (32, 56) for accommodating the contact element (25, 49),
wherein an outer surface of the contact element (25, 49) is encompassed by the connecting sleeve (32, 56) in a fluid-tight manner, wherein the connector element (26, 50) is at least partly exposed to the outside of the cooling jacket (31, 54) and wherein the at least one terminal connector (28, 52) is at least partly disposed in the interior of the cooling jacket (31, 54), wherein the at least one terminal connector (28, 52) is configured for being electrically connected with at least one electrical wire (36, 53) that is introducible into the cooling jacket (31, 54) via at least one of the fluid ports,
wherein via one of the first (33, 57) or second fluid ports (34, 59), a flow of coolant is supplied to the cooling jacket (31, 54), and
wherein via the other of the first (33, 57) or second fluid ports (34, 59),
a flow of coolant is withdrawn from the cooling jacket (31, 54), the plug-in connector (24, 48) further comprising an insulating sheath (38, 63) configured for electrically insulating the contact element (25, 49) relative to a coolant in the interior of the cooling jacket (31, 54).

15. A method for operating a plug-in connector (24, 48), the plug-in connector comprising
a contact element (25, 49) with a connector element (26, 50) and at least one terminal connector (28, 52),
a cooling jacket (31, 54) with a connecting sleeve (32, 56) for accommodating the contact element (25, 49), a first fluid port (33, 57) adapted for fluidically connecting the cooling jacket (31, 54) with a first tube (40, 58) and a second fluid port (34, 59) adapted for fluidically connecting the cooling jacket (31, 54) with a second tube (44, 61),
wherein an outer surface of the contact element (25, 49) is encompassed by the connecting sleeve (32, 56) in a fluid-tight manner, wherein the connector element (26, 50) is at least partly exposed to the outside of the cooling jacket (31, 54) and wherein the at least one terminal connector (28, 52) is at least partly disposed in the interior of the cooling jacket (31, 54), wherein the at least one terminal connector (28, 52) is configured for being electrically connected with at least one electrical wire (36, 53) that is introducible into the cooling jacket (31, 54) via at least one of the fluid ports,
the plug-in connector further comprising an insulating sheath (38, 63) configured for electrically insulating the contact element (25, 49) relative to a coolant in the interior of the cooling jacket (31, 54),
the method comprising
supplying a flow of coolant to the second fluid port (34, 59),
wherein the coolant passes the cooling jacket's interior, with the coolant impinging on the insulating sheath (38, 63),
withdrawing a flow of coolant at the first fluid port (33, 57).

## Patentansprüche

1. Steckverbinder (1, 24), der Steckverbinder umfassend
ein Kontaktelement (2, 25) mit einem Verbindungselement (4, 26) und mindestens einen Klemmenverbinder (6, 28),
einen Kühlmantel (9, 31) mit einer ersten Fluidöffnung (13, 33), die für eine strömungstechnische Verbindung des Kühlmantels (9, 31) mit einer ersten Röhre (17, 40) ausgelegt ist, und einer zweiten Fluidöffnung (14, 34), die für eine strömungstechnische Verbindung des Kühlmantels (9, 31) mit einer zweiten Röhre (20, 44) ausgelegt ist, wobei
der Kühlmantel (9, 31) ferner eine Verbindungsmuffe (10, 32) zum Aufnehmen des Kontaktelementes (2, 25) umfasst, wobei der Kühlmantel (9, 31) einteilig hergestellt ist und wobei der Kühlmantel (9, 31) aus einem polymeren Werkstoff besteht,
**dadurch gekennzeichnet, dass**
eine Außenfläche des Kontaktelementes (2, 25) von der Verbindungsmuffe (10, 32) fluiddicht umgeben ist, wobei das Verbindungselement (4, 26) zumindest teilweise der Außenseite des Kühlmantels (9, 31) ausgesetzt ist und wobei der mindestens eine Klemmenverbinder (6, 28) zumindest teilweise im Inneren des Kühlmantels (9, 31) angeordnet ist, wobei der mindestens eine Klemmenverbinder (6, 28) so konfiguriert ist, dass er mit mindestens einer elektrischen Leitung (12, 36), die in den Kühlmantel (9, 31) über mindestens eine der Fluidöffnungen eingeführt werden kann, elektrisch verbunden ist,
wobei über eine der ersten (13, 33) oder der zweiten Fluidöffnungen (14, 34) ein Kühlmittelstrom dem Kühlmantel (9, 31) zugeführt wird, und wobei über die andere der ersten (13, 33) oder der zweiten Fluidöffnungen (14, 34) ein Kühlmittelstrom vom Kühlmantel (9, 31) abgezogen wird.

2. Steckverbinder (1, 24) nach Anspruch 1, wobei der Kühlmantel (9, 31) aus einem Elastomer besteht.

3. Steckverbinder (1) nach Anspruch 1 oder 2, ferner umfassend ein Gehäuse (23), wobei das Gehäuse (23) den Kühlmantel (9) umgibt, wobei eine durch das Gehäuse (23) vorgesehene Abstützung zur Begrenzung der Verformung oder Ausdehnung des Kühlmantels (9) ausgelegt ist.

4. Steckverbinder (1, 24) nach einem der Ansprüche 1 bis 3, wobei die Verbindungsmuffe (10, 32) an einem ersten Ende in einer Achsrichtung (3, 30) des Steckverbinders (1, 24) angeordnet ist, wobei die erste Fluidöffnung (13, 33) an einem zweiten Ende angeordnet ist, das dem ersten Ende in Achsrichtung (3, 30) gegenüberliegt und wobei die zweite Fluidöffnung (14, 34) an einer seitlichen Position des Kühlmantels (9, 31) angeordnet ist.

5. Steckverbinder (1, 24) nach einem der Ansprüche 1 bis 4, wobei das Innere des Kühlmantels (9, 31) für die Druckbeaufschlagung durch ein über mindestens eine der Fluidöffnungen zugeführtes Fluid ausgelegt ist.

6. Steckverbinder (1, 24) nach einem der Ansprüche 1 bis 5, wobei über die zweite Fluidöffnung (14, 34) ein Kühlmittelstrom dem Kühlmantel (9, 31) zugeführt wird, und wobei über die erste Fluidöffnung (13, 33) ein Kühlmittelstrom von dem Kühlmantel (9, 31) abgezogen wird.

7. Steckverbinder (1, 24) nach einem der Ansprüche 1 bis 6, wobei die zweite Fluidöffnung (14, 34) an einer seitlichen Position des Kühlmantels (9, 31) angeordnet ist, wobei der mindestens eine Klemmenverbinder (6, 28) so angeordnet ist, dass ein über die zweite Fluidöffnung (14, 34) zugeführter Kühlmittelstrom auf den mindestens einen Klemmenverbinder (6) oder auf einen Isoliermantel (38) trifft, der den mindestens einen Klemmenverbinder (28) umschließt.

8. Steckverbinder (1) nach einem der Ansprüche 1 bis 7, wobei, wenn ein Kühlmittelstrom mindestens einer Fluidöffnung zugeführt wird, das Kühlmittel in direktem Kontakt mit dem mindestens einen Klemmenverbinder (6) des Kontaktelementes (2) steht.

9. Steckverbinder (1) nach Anspruch 8, wobei das Kühlmittel ein nichtleitendes Kühlmittel ist.

10. Steckverbinder (24) nach einem der Ansprüche 1 bis 7, ferner umfassend die mindestens eine elektrische Leitung (36), wobei jede der elektrischen Leitungen (36) mit einem entsprechenden Klemmenverbinder (28) elektrisch verbunden ist, wobei die mindestens eine elektrische Leitung (36) und zumindest der Teil des Kontaktelementes (25), der einem über mindestens einer der Fluidöffnungen zugeführten Kühlmittel ausgesetzt ist, relativ zum Kühlmittel elektrisch isoliert sind.

11. Steckverbinder (1, 24) nach einem der Ansprüche 1 bis 10, wobei der Steckverbinder (1, 24) ferner ein zweites Kontaktelement umfasst, wobei der Kühlmantel (9, 31) ferner eine zweite Verbindungsmuffe für die Aufnahme des zweiten Kontaktelementes umfasst, wobei eine Außenfläche des zweiten Kontaktelementes von der zweiten Verbindungsmuffe fluiddicht umgeben ist.

12. Steckverbinder (1, 24) nach einem der Ansprüche 1 bis 11, wobei der Steckverbinder (1, 24) ein Ladestecker ausgelegt für die Durchführung eines Ladevorganges ist.

13. Verfahren zum Bedienen eines Steckverbinders (1, 24), der Steckverbinder umfassend ein Kontaktelement (2, 25) mit einem Verbindungselement (4, 26) und mindestens einen Klemmenverbinder (6, 28),
einen Kühlmantel (9, 31) mit einer Verbindungsmuffe (10, 32) für die Aufnahme des Kontaktelementes (2, 25), eine erste Fluidöffnung (13, 33), die für eine strömungstechnische Verbindung des Kühlmantels (9, 31) mit einer ersten Röhre (17, 40) ausgelegt ist, und eine zweite Fluidöffnung (14, 34), die für eine strömungstechnische Verbindung des Kühlmantels (9, 31) mit einer zweiten Röhre (20, 44) ausgelegt ist, wobei der Kühlmantel (9, 31) einteilig hergestellt ist und wobei der Kühlmantel (9, 31) aus einem polymeren Werkstoff besteht,
wobei eine Außenfläche des Kontaktelementes (2, 25) von der Verbindungsmuffe (10, 32) fluiddicht umgeben ist, wobei das Verbindungselement (4, 26) zumindest teilweise der Außenseite des Kühlmantels (9, 31) ausgesetzt ist und wobei der mindestens eine Klemmenverbinder (6, 28) zumindest teilweise im Inneren des Kühlmantels (9, 31) angeordnet ist, wobei der mindestens eine Klemmenverbinder (6, 28) so konfiguriert ist, dass er mit mindestens einer elektrischen Leitung (12, 36), die in den Kühlmantel (9, 31) über mindestens eine der Fluidöffnungen eingeführt werden kann, elektrisch verbunden ist,
das Verfahren umfassend
die Zufuhr eines Kühlmittelstromes zu der zweiten Fluidöffnung (14, 34),
wobei das Kühlmittel das Innere des Kühlmantels durchströmt, wobei das Kühlmittel auf den mindestens einen Klemmenverbinder (6) des Kontaktelementes (2) oder auf einen den mindestens einen Klemmenverbinder (28) umschließenden Isoliermantel (38) trifft,
das Abziehen eines Kühlmittelstroms an der ersten Fluidöffnung (13, 33).

14. Steckverbinder (24, 48), der Steckverbinder umfassend
ein Kontaktelement (25, 49) mit einem Verbindungselement (26, 50) und mindestens einen Klemmenverbinder (28, 52),
einen Kühlmantel (31, 54) mit einer ersten Fluidöffnung (33, 57), die für eine strömungstechnische Verbindung des Kühlmantels (31, 54) mit einer ersten Röhre (40, 58) ausgelegt ist, und einer zweiten Fluidöffnung (34, 59), die für eine strömungstechnische Verbindung des Kühlmantels (31, 54) mit einer zweiten Röhre (44, 61) ausgelegt ist, **dadurch gekennzeichnet, dass** der Kühlmantel (31, 54) ferner eine Verbindungsmuffe (32, 56) zum Aufnehmen des Kontaktelementes (25, 49) umfasst,
wobei eine Außenfläche des Kontaktelementes (25, 49) von der Verbindungsmuffe (32, 56) fluiddicht umgeben ist, wobei das Verbindungselement (26, 50) zumindest teilweise der Außenseite des Kühlmantels (31, 54) ausgesetzt ist und wobei der mindestens eine Klemmenverbinder (28, 52) zumindest teilweise im Inneren des Kühlmantels (31, 54) angeordnet ist, wobei der mindestens eine Klemmenverbinder (28, 52) so konfiguriert ist, dass er mit mindestens einer elektrischen Leitung (36, 53), die in den Kühlmantel (31, 54) über mindestens eine der Fluidöffnungen eingeführt werden kann, elektrisch verbunden ist,
wobei über eine der ersten (33, 57) oder der zweiten Fluidöffnungen (34, 59) dem Kühlmantel (31, 54) ein Kühlmittelstrom zugeführt wird, und wobei über die andere der ersten (33, 57) oder der zweiten Fluidöffnungen (34, 59) ein Kühlmittelstrom von dem Kühlmantel (31, 54) abgezogen wird, der Steckverbinder (24, 48) ferner umfassend einen Isoliermantel (38, 63), der ausgelegt ist, um das Kontaktelement (25, 49) relativ zu einem Kühlmittel im Inneren des Kühlmantels (31, 54) elektrisch zu isolieren.

15. Verfahren zum Bedienen eines Steckverbinders (24, 48), der Steckverbinder umfassend ein Kontaktelement (25, 49) mit einem Verbindungselement (26, 50) und mindestens einen Klemmenverbinder (28, 52),
einen Kühlmantel (31, 54) mit einer Verbindungsmuffe (32, 56) für die Aufnahme des Kontaktelementes (25, 49), eine erste Fluidöffnung (33, 57), die für eine strömungstechnische Verbindung des Kühlmantels (31, 54) mit einer ersten Röhre (40, 58) ausgelegt ist und eine zweite Fluidöffnung (34, 59), die für eine strömungstechnische Verbindung des Kühlmantels (31, 54) mit einer zweiten Röhre (44, 61) ausgelegt ist, wobei eine Außenfläche des Kontaktelementes (25, 49) von der Verbindungsmuffe (32, 56) fluiddicht umgeben ist, wobei das Verbindungselement (26, 50) zumindest teilweise der Außenseite des Kühlmantels (31, 54) ausgesetzt ist und wobei der mindestens eine Klemmenverbinder (28, 52) zumindest teilweise im Inneren des Kühlmantels (31, 54) angeordnet ist, wobei der mindestens eine Klemmenverbinder (28, 52) so konfiguriert ist, dass er mit mindestens einer elektrischen Leitung (36, 53), die in den Kühlmantel (31, 54) über mindestens eine der Fluidöffnungen eingeführt werden kann, elektrisch verbunden ist, der Steckverbinder ferner umfassend einen Isoliermantel (38, 63), der ausgelegt ist, um das Kontaktelement (25, 49) relativ zu einem Kühlmittel im Inneren des Kühlmantels (31, 54) elektrisch zu isolieren,
das Verfahren umfassend
die Zufuhr eines Kühlmittelstromes zu der zweiten Fluidöffnung (34, 59), wobei das Kühlmittel das Innere des Kühlmantels durchströmt, wobei das Kühlmittel auf den Isoliermantel (38, 63) trifft,
das Abziehen eines Kühlmittelstromes an der ersten Fluidöffnung (33, 57).

## Revendications

1. Connecteur enfichable (1, 24), le connecteur enfichable comprenant
un élément de contact (2, 25) avec un élément de liaison (4, 26) et au moins un connecteur de borne (6, 28),
une chemise de refroidissement (9, 31) avec un premier orifice de fluide (13, 33) configuré pour relier de manière fluidique la chemise de refroidissement (9, 31) à la première tubulure (17, 40) et un second orifice de fluide (14, 34) configuré pour relier de manière fluidique la chemise de refroidissement (9, 31) à la seconde tubulure (20, 44), dans lequel
la chemise de refroidissement (9, 31) comprend en outre un manchon de raccordement (10, 32) pour loger l'élément de contact (2, 25), dans lequel la chemise de refroidissement (9, 31) est fabriquée en une seule pièce et dans lequel la chemise de refroidissement (9, 31) est constituée d'un matériau polymère,
**caractérisé en ce qu'**
une surface extérieure de l'élément de contact (2, 25) est entourée du manchon de raccordement (10, 32) de manière étanche aux fluides, dans lequel l'élément de liaison (4, 26) est au moins en partie exposé à l'extérieur de la chemise de refroidissement (9, 31) et dans lequel le connecteur de borne (6, 28), au moins au nombre d'un, est au moins en partie disposé à l'intérieur de la chemise de refroidissement (9, 31), dans lequel le connecteur de borne (6, 28), au moins au nombre d'un, est configuré pour être connecté électriquement à au moins un câble électrique (12, 36) qui peut être introduit dans la chemise de refroidissement (9, 31) par l'intermédiaire d'au moins un des orifices de fluide, dans lequel par l'intermédiaire de l'un des premiers (13, 33) ou seconds orifices de fluide (14, 34), un flux de réfrigérant est fourni à la chemise de refroidissement (9, 31), et dans lequel par l'intermédiaire de l'autre des premiers (13, 33) ou seconds orifices de fluide (14, 34), un flux de réfrigérant est retiré de la chemise de refroidissement (9, 31).

2. Connecteur enfichable (1, 24) selon la revendication 1, dans lequel la chemise de refroidissement (9, 31) est constituée d'un élastomère.

3. Connecteur enfichable (1) selon la revendication 1 ou la revendication 2, comprenant en outre un boîtier (23), ledit boîtier (23) entourant la chemise de refroidissement (9), dans lequel un support fourni par le boîtier (23) est adapté pour limiter une déformation ou expansion de la chemise de refroidissement (9).

4. Connecteur enfichable (1, 24) selon l'une quelconque des revendications 1 à 3, dans lequel le manchon de raccordement (10, 32) est disposé à une première extrémité dans un sens axial (3, 30) du connecteur enfichable (1, 24), dans lequel le premier orifice de fluide (13, 33) est disposé à la seconde extrémité opposée à la première extrémité en sens axial (3, 30) et dans lequel le second orifice de fluide (14, 34) est disposé à une position latérale de la chemise de refroidissement (9, 31).

5. Connecteur enfichable (1, 24) selon l'une quelconque des revendications 1 à 4, dans lequel l'intérieur de la chemise de refroidissement (9, 31) est adapté à être pressurisé par un fluide fourni par l'intermédiaire d'au moins un des orifices de fluide.

6. Connecteur enfichable (1, 24) selon l'une quelconque des revendications 1 à 5, dans lequel un flux de réfrigérant est fourni à la chemise de refroidissement (9, 31) par l'intermédiaire du second orifice de fluide (14, 34), et dans lequel un flux de réfrigérant est retiré de la chemise de refroidissement (9, 31) par l'intermédiaire du premier orifice de fluide (13, 33).

7. Connecteur enfichable (1, 24) selon l'une quelconque des revendications 1 à 6. dans lequel le second orifice de fluide (14, 34) est disposé à une position latérale de la chemise de refroidissement (9, 31), dans lequel le connecteur de borne (6, 28), au moins au nombre d'un, est disposé de sorte qu'un flux de réfrigérant fourni par l'intermédiaire du second orifice de fluide (14, 34) touche le connecteur de borne (6), au moins au nombre d'un, ou une gaine isolante (38) entourant le connecteur de borne (28), au moins au nombre d'un.

8. Connecteur enfichable (1) selon l'une quelconque des revendications 1 à 7, dans lequel, lorsqu'un flux de réfrigérant est fourni à au moins l'un des orifices de fluide, le réfrigérant est en contact direct avec le connecteur de borne (6), au moins au nombre d'un, de l'élément de contact (2).

9. Connecteur enfichable (1) selon la revendication 8, dans lequel le réfrigérant est un réfrigérant non-conducteur.

10. Connecteur enfichable (24) selon l'une quelconque des revendications 1 à 7, comprenant en outre le câble électrique (36), au moins au nombre d'un, chacun des câbles électriques (36) étant connecté électriquement à un connecteur de borne (28) correspondant, dans lequel le câble électrique (36), au moins au nombre d'un, et au moins la partie de l'élément de contact (25), qui est exposée à un réfrigérant fourni par au moins l'un des orifices de fluide, sont isolés électriquement par rapport au réfrigérant.

11. Connecteur enfichable (1, 24) selon l'une quelconque des revendications 1 à 10, dans lequel le connecteur enfichable (1, 24) comprend en outre un second élément de contact, la chemise de refroidissement (9, 31) comprenant en outre un second manchon de raccordement pour loger le second élément de contact, une surface extérieure du second élément de contact étant entourée par le second manchon de raccordement de manière étanche aux fluides.

12. Connecteur enfichable (1, 24) selon l'une quelconque des revendications 1 à 11, dans lequel le connecteur enfichable (1, 24) est un connecteur de charge adapté pour effectuer une opération de chargement.

13. Procédé pour opérer un connecteur enfichable (1, 24), le connecteur enfichable comprenant un élément de contact (2, 25) avec un élément de liaison (4, 26) et au moins un connecteur de borne (6, 28),
une chemise de refroidissement (9, 31) avec un manchon de raccordement (10, 32) pour loger l'élément de contact (2, 25), un premier orifice de fluide (13, 33) configuré pour relier de manière fluidique la chemise de refroidissement (9, 31) à la première tubulure (17, 40) et un second orifice de fluide (14, 34) configuré pour relier de manière fluidique la chemise de refroidissement (9, 31) à la seconde tubulure (20, 44), dans lequel la chemise de refroidissement (9, 31) est fabriquée en une seule pièce et dans lequel la chemise de refroidissement (9, 31) est constituée d'un matériau polymère,
dans lequel une surface extérieure de l'élément de contact (2, 25) est entourée du manchon de raccordement (10, 32) de manière étanche aux fluides, dans lequel l'élément de liaison (4, 26) est au moins en partie exposé à l'extérieur de la chemise de refroidissement (9, 31) et dans lequel le connecteur de borne (6, 28), au moins au nombre d'un, est au moins en partie disposé à l'intérieur de la chemise de refroidissement (9, 31), dans lequel le connecteur de borne (6, 28), au moins au nombre d'un, est configuré pour être connecté électriquement à au moins un câble électrique (12, 36) qui peut être introduit dans la chemise de refroidissement (9, 31) par l'intermédiaire d'au moins un des orifices de fluide,
le procédé comprenant
la mise à disposition d'un flux de réfrigérant vers le second orifice de fluide (14, 34),
dans lequel le réfrigérant traverse l'intérieur de la chemise de refroidissement, le réfrigérant touchant le connecteur de borne (6), au moins au nombre d'un, de l'élément de contact (2) ou une gaine isolante (38) entourant le connecteur de borne (28), au moins au nombre d'un,
le retrait d'un flux de réfrigérant au niveau du premier orifice de fluide (13, 33).

14. Connecteur enfichable (24, 48), le connecteur enfichable comprenant
un élément de contact (25, 49) avec un élément de liaison (26, 50) et au moins un connecteur de borne (28, 52),
une chemise de refroidissement (31, 54) avec un premier orifice de fluide (33, 57) configuré pour relier de manière fluidique la chemise de refroidissement (31, 54) à la première tubulure (40, 58) et un second orifice de fluide (34, 59) configuré pour relier de manière fluidique la chemise de refroidissement (31, 54) à la seconde tubulure (44, 61), **caractérisé en ce que** la chemise de refroidissement (31, 54) comprend en outre un manchon de raccordement (32, 56) pour loger l'élément de contact (25, 49),
dans lequel une surface extérieure de l'élément de contact (25, 49) est entourée du manchon de raccordement (32, 56) de manière étanche aux fluides, dans lequel l'élément de liaison (26, 50) est au moins en partie exposé à l'extérieur de la chemise de refroidissement (31, 54) et dans lequel le connecteur de borne (28, 52), au moins au nombre d'un, est au moins en partie disposé à l'intérieur de la chemise de refroidissement (31, 54), dans lequel le connecteur de borne (28, 52), au moins au nombre d'un, est configuré pour être connecté électriquement à au moins un câble électrique (36, 53) qui peut être introduit dans la chemise de refroidissement (31, 54) par l'intermédiaire d'au moins un des orifices de fluide,
dans lequel par l'intermédiaire de l'un des premiers (33, 57) ou des seconds orifices de fluide (34, 59), un flux de réfrigérant est fourni à la chemise de refroidissement (31, 54), et dans lequel par l'intermédiaire de l'autre des premiers (33, 57) ou des seconds orifices de fluide (34, 59), un flux de réfrigérant est retiré de la chemise de refroidissement (31, 54), le connecteur enfichable (24, 48) comprenant en outre une gaine isolante (38, 63) configurée pour isoler électriquement l'élément de contact (25, 49) par rapport à un réfrigérant à l'intérieur de la chemise de refroidissement (31, 54).

15. Procédé pour opérer un connecteur enfichable (24, 48), le connecteur enfichable comprenant un élément de contact (25, 49) avec un élément de liaison (26, 50) et au moins un connecteur de borne (28, 52),
une chemise de refroidissement (31, 54) avec un manchon de raccordement (32, 56) pour loger l'élément de contact (25, 49), un premier orifice de fluide (33, 57) adapté pour relier de manière fluidique la chemise de refroidissement (31, 54) à une première tubulure (40, 58) et un second orifice de fluide (34, 59) adapté pour relier de manière fluidique la chemise de refroidissement (31, 54) à une seconde tubulure (44, 61), dans lequel une surface extérieure de l'élément de contact (25, 49) est entourée du manchon de raccordement (32, 56) de manière étanche aux fluides, dans lequel l'élément de liaison (26, 50) est au moins en partie exposé à l'extérieur de la chemise de refroidissement (31, 54) et dans lequel le connecteur de borne (28, 52), au moins au nombre d'un, est au moins en partie disposé à l'intérieur de la chemise de refroidissement (31, 54), dans lequel le connecteur de borne (28, 52), au moins au nombre d'un, est configuré pour être connecté électriquement à au moins un câble électrique (36, 53) qui peut être introduit dans la chemise de refroidissement (31, 54) par l'intermédiaire d'au moins un des orifices de fluide, le connecteur enfichable comprenant en outre une gaine isolante (38, 63) configurée pour isoler électriquement l'élément de contact (25, 49) par rapport à un réfrigérant à l'intérieur de la chemise de refroidissement (31, 54), le procédé comprenant
la mise à disposition d'un flux de réfrigérant vers le second orifice de fluide (34, 59),
dans lequel le réfrigérant traverse l'intérieur de la chemise de refroidissement, le réfrigérant touchant la gaine isolante (38, 63),
le retrait d'un flux de réfrigérant au niveau du premier orifice de fluide (33, 57).
